# EUROPEAN PATENT APPLICATION

(11) **EP 3 653 545 A1**
(43) Date of publication of application: **20.05.2020**
(21) Application number: 18205947.7
(22) Date of filing: 13.11.2018
(51) Int. Cl.: B65G 17/24

(54) **A CONVEYOR JUNCTION**

(71) Applicant: Logevo AB, 34324 Älmhult (SE)
(72) Inventor: Svensson, Kim, 312 61 MELLBYSTRAND (SE)
(74) Representative: Anderberg, Viveka

(57) **Abstract**

A conveyor junction (50) for conveying goods (12) in different directions in a multi-storey goods storage arrangement. The conveyor junction (50) comprises an endless junction transfer belt (54) extending horizontally over the conveyor junction (50) in a first direction, said endless junction transfer belt (54) comprising a plurality of jointed flat sections (56), each section (56) supporting a plurality of rotatable balls (58) extending partly from an upper side and from a bottom side of the section (56), said plurality of jointed sections (56) forming an upper transport portion (60) and a lower return portion (62); and an endless junction conveyor belt (64) extending horizontally in a second direction perpendicular to said first direction and between said upper transport portion (60) and said lower return portion (62) of said endless junction transfer belt (54) and engaging with an upper part (66) the rotatable balls (58) of the upper transport portion (60) of said endless junction transfer belt (54).

## Description

### TECHNICAL FIELD

A conveyor junction for conveying goods in different directions in a multi-storey goods storage arrangement, comprising a plurality of levels of rows arranged in parallel and comprising two transport rails extending in parallel along the row, and supply aisles extending in parallel between opposing ends of sets of said rows.

### BACKGROUND

Goods storage systems today tend to grow larger and get more automated with less manual handling. Often, the storage system is an arrangement of storage levels and storage rows creating a complex system. The storage systems should be able to handle the supply of goods entering the storage system to the storage levels and storage rows, the storage of the goods in predetermined positions within the storage system and picking of goods exiting the storage system.

Many storage systems today use standard components which tend to be bulky and heavy when storing and handling the goods. These types of components often do not have an impact on a smaller storage system but for a larger storage system, which often handles many different types of goods when it comes to size and/or weight, it could mean that internal handling and transporting of goods is not efficient.

Traditional goods handling equipment comprising belts, rollers or chains are capable of transporting traditional load carriers, such as pallets and base boards. Also, transveyors and other types of devices forming a section in conveyor system that shifts direction of goods are designed to handle traditional load carriers.

### SUMMARY

An object of the present invention is to provide improvements over prior art. This object is achieved by an invention defined in the appended independent claims, certain embodiments being set forth in the related dependent claims.

In a first aspect of the present invention, there is provided a conveyor junction for conveying goods in different directions in a multi-storey goods storage arrangement, comprising a plurality of levels of rows arranged in parallel and comprising two transport rails extending in parallel along each row, and supply aisles extending in parallel between opposing ends of sets of said rows. The conveyor junction comprises an endless junction transfer belt extending horizontally over the conveyor junction in a first direction, said endless junction transfer belt comprising a plurality of jointed flat sections, each section supporting a plurality of rotatable balls extending partly from an upper side and from a bottom side of the section, said plurality of jointed sections forming an upper transport portion and a lower return portion; and an endless junction conveyor belt extending horizontally in a second direction perpendicular to said first direction and between said upper transport portion and said lower return portion of said endless junction transfer belt and engaging with an upper part the rotatable balls of the upper transport portion of said endless junction transfer belt.

These features will add a higher flexibility to carry different load units. There is less dependency to specific load carriers and in some aspects load carriers can be eliminated. Different types of goods can be handled automatically without additional techniques or cost driving solutions. Goods picked inside the multi-storey goods storage arrangement can be transported out along conveyors and re-directed to a merge and out-feed area in a very compact and efficient arrangement.

Additional advantages will be set forth in part in the description which follows or may be learned by practice. The advantages will be realized and attained by means of the elements and combinations particularly pointed out in the appended claims.

### BRIEF DESCRIPTION OF THE DRAWINGS

The accompanying drawings, which are incorporated in and constitute a part of this specification, illustrate embodiments and together with the description, serve to explain the principles of the methods and systems. In the drawings,
- Fig. 1: is a schematic side elevation view of a basic multi-storey goods storage arrangement,
- Fig. 2: is a schematic top view a basic multi-storey goods storage arrangement,
- Fig. 3: is a schematic top view a basic multi-storey goods storage arrangement with an out-feed area comprising one embodiment of a conveyor junction in accordance with the invention,
- Fig. 4: is a schematic top view of one embodiment of a conveyor junction in accordance with the invention showing goods transported along the conveyor junction,
- Fig. 5: is a schematic top view of the embodiment of the conveyor junction in Fig. 4 showing goods transported transverse the conveyor junction,
- Fig. 6: is a schematic side section view of the conveyor junction in Fig. 4 showing goods transported transverse the conveyor junction,
- Fig. 7: is a schematic side section view of an alternative embodiment of a conveyor junction showing goods transported transverse the conveyor junction, and

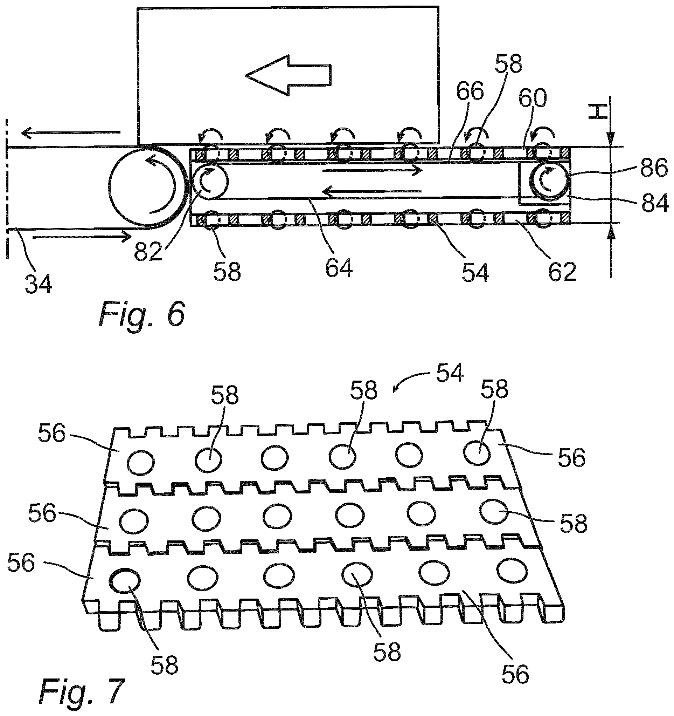

- Fig. 7: is a schematic perspective view of an endless junction transfer belt used in the disclosed conveyor junction.

### DETAILED DESCRIPTION

Multi-storey goods storage arrangements comprise a racking of uprights, beams cross braces and similar mechanical components. Shuttles and pickers are supported and transported on transfer carts along supply aisles. The shuttles and pickers are arranged to move away from a transfer cart or a picker transfer cart into the rows to leave goods or to pick up goods stored therein.

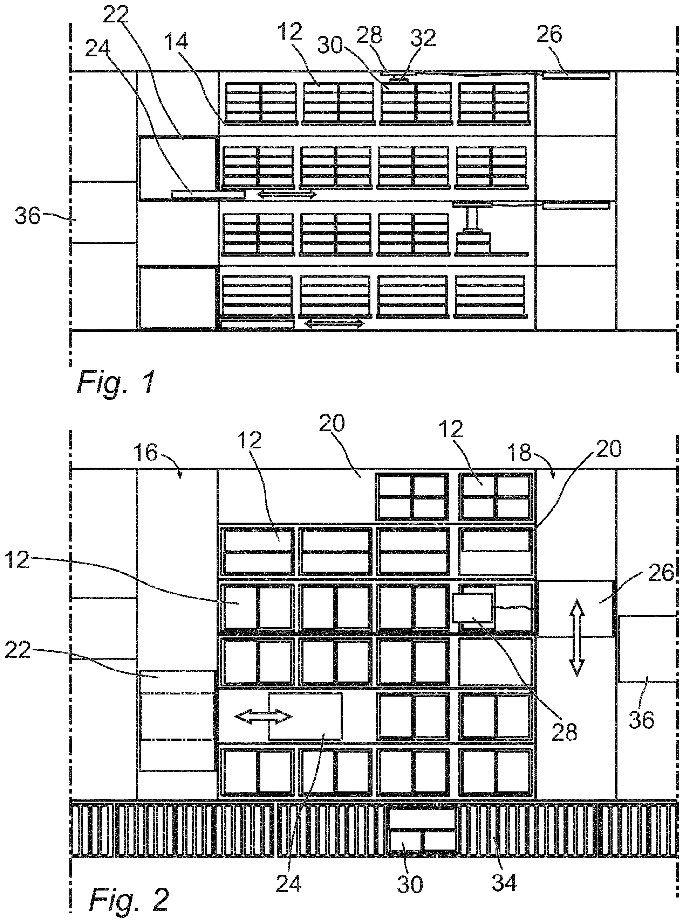

The multi-storey goods storage arrangement 10 shown in Fig. 1 comprises four levels or storeys. On each level there are a plurality of parallel rows 20 comprising rail systems supporting goods 12 or load carriers 14 with goods 12. Supply aisles 16 and picker aisles 18 extend in parallel along opposite ends of said rows 20. Transfer carts 22 supporting shuttles 24 are arranged to run back and forth along said supply aisles 16. Transfer top carts 26 supporting pickers 28 are arranged to run back and forth along said picker aisles 18. In various embodiments, combined supply aisles 16 and picker aisles 18 are provided.

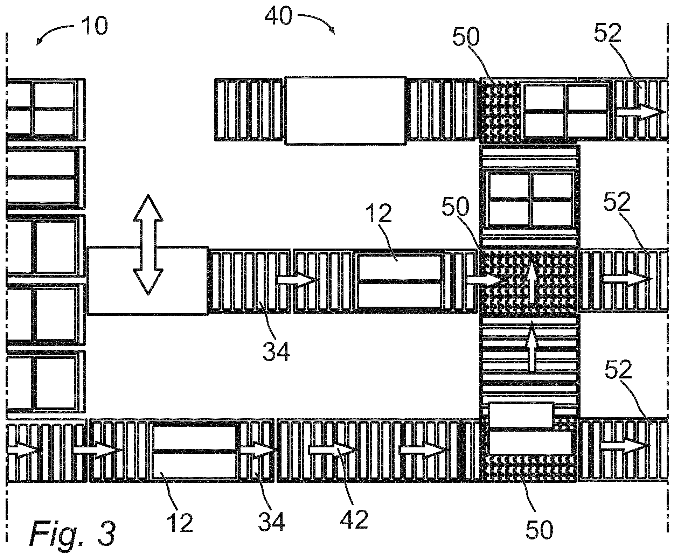

The shuttles 24 are arranged to be transported by the transfer carts 22 to positions in front of a row 20 while carrying goods 12 or load carriers 14 with goods 12 from an in-feed area (not shown). In a position in front of the row 20, the shuttle 24 moves into a row 20 supported by a bottom rail system and further into a position where the goods 12 or a load carrier 14 with goods 12 are placed in the rail system. In a similar manner, the pickers 28 are arranged to be transported by the transfer top carts 26 positions in front of a row 20. In a position in front of the row 20, the picker 28 moves into the row 20 supported on a top rail system to a selected position above the goods, such as a box or package 30. The picker 28 is provided with a lifting device 32 comprising suction means or similar means (not shown) for lifting and carrying a box or package 30. Picked up boxes or packages 30 from different rows can be placed together and be delivered to a conveyor arrangement 34 running through the goods storage arrangement 10. In various embodiments, the conveyor arrangement 34 comprises a belt, a lamina, chains or rollers. The conveyor arrangement 34 extends out of the racking of the goods storage arrangement 10 to a merge and out-feed area 40, c.f. Fig. 3, comprising a conveyor junction 50. In various embodiments, there can be a plurality of conveyor arrangements 34 from different levels and different locations within the goods storage arrangement 10. Elevators 36 are provided in relation to the picker aisles 18 and to the supply aisles, respectively, to move goods to and from different levels.

The merge and out-feed area 40 as shown in Fig. 3 is provided in the vicinity of the racking of the goods storage arrangement 10. At least one conveyor arrangement 34 is provided to transport goods 12 or load carriers 14 with goods 12 out from the racking of the goods storage arrangement 10. Normally, the conveyor arrangement 34 moves in one direction only as indicated by first arrows 42. A conveyor junction 50 is used to redirect goods arriving on conveyor arrangements 34 to a selected output line 52 or an assembling area (not shown).

In the assembling area, an assembling picker picks up a package or box, rotates it if appropriate, and places it on a support device. A supervising and control system determines the order in which the packages are directed to the assembling area. Normally, larger or wider packages with the largest bottom area are handled first to allow smaller packages to be placed on top of the larger packages on the support device. The conveyor junction 50 can be used also in elevators 36 for directing load carriers 14 into and out of rows of the goods storage arrangement 10 or to and from conveyor arrangements.

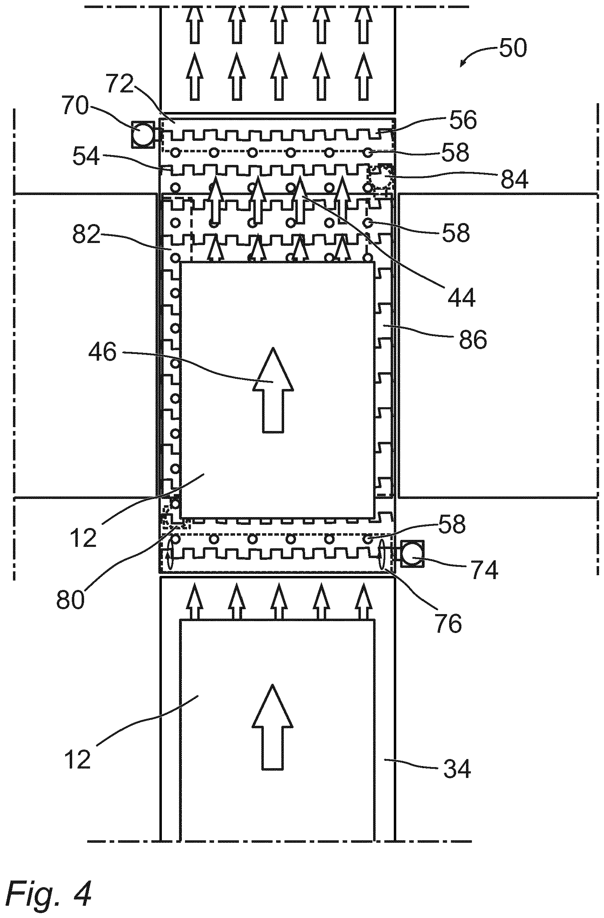

The conveyor junction 50 as shown in Fig. 4 to Fig. 6 comprises an endless junction transfer belt 54 supported by a first cylindrical or tubular drive gear 72 and a second cylindrical or tubular drive gear 76. The first drive gear 72 is powered by a first drive motor 70, and the second drive gear 76 is powered by a second drive motor 74. The endless junction transfer belt 54 comprises a plurality of jointed flat rectangular sections 56. Each flat section 56 supports a plurality of rotatable balls 58. The rotatable balls 58 are arranged in a row substantially enclosed in the flat sections 56 but extends partly therefrom as best shown in Fig. 6 and Fig. 7. Goods 12 arriving on the conveyor arrangement 34 will be moved onto the endless junction transfer belt 54. While the first drive motor 70 and the second drive motor 74 are powered the endless junction transfer belt 54 will move as indicated by second arrows 44 and bring along goods 12 as indicated by third arrows 46. In this event, an endless junction conveyor belt 64 located between an upper transport portion 60 and a lower return portion 62 of the endless junction transfer belt 54 will remain still. As long as the endless junction transfer belt 54 is running and the endless junction conveyor belt 64 is not, he goods 12 will pass through the conveyor junction 50 as shown in Fig. 4 supported by the rotatable balls 58. For different reasons endless junction conveyor belt 64 can be arranged as two similar or identical conveyor belts running in parallel.

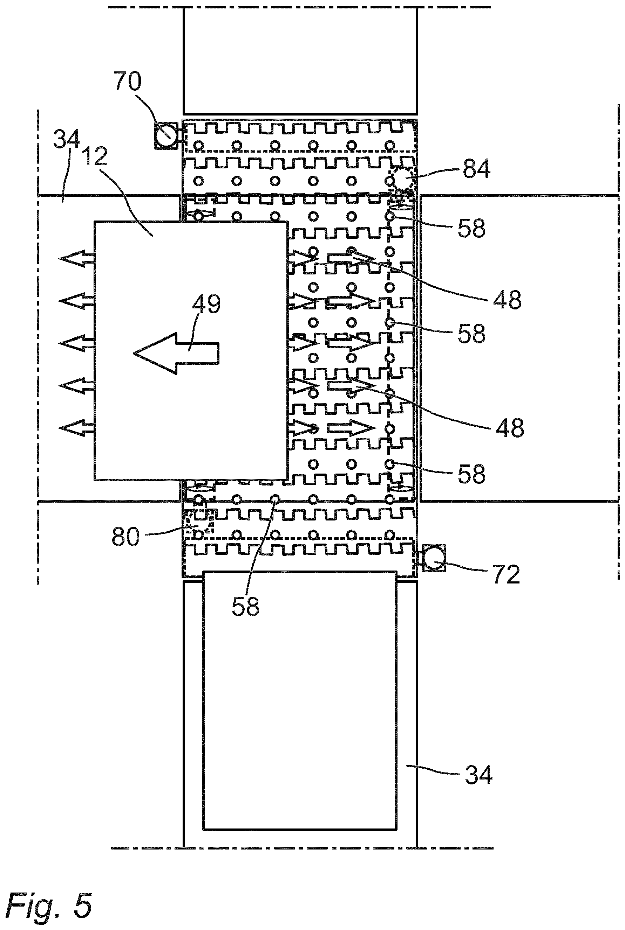

Another situation is shown in Fig. 5. Here, the endless junction transfer belt 54 has come to a stop when the goods 12 is in a central position of the conveyor junction 50. In this position, the goods 12 will force the rotatable balls 58 to engage an upper part 66 of the endless junction conveyor belt 64, c.f. Fig. 6. Then, the endless junction conveyor belt 64 will be set to run in the direction of the fourth arrows 48. The movement of endless junction conveyor belt 64 in this direction result in a rotation of the rotatable balls 58 in an opposite direction. As a result, the goods 12 will be moved in the direction of fifth arrow 49.

The endless junction conveyor belt 64, c.f. Fig. 6, extends between a third drive gear 82 powered by a third drive motor 80, and a fourth drive gear 86 powered by a fourth drive motor 84. In case two endless junction conveyor belts 64 are provided in parallel also drive gears and drive motors normally are doubled. The upper transport portion 60 of said endless junction transfer belt 54 and the lower return portion 62 of said endless junction transfer belt 54 enclose the endless junction conveyor belt 64. As a result, a total height H of the conveyor junction 50 is kept comparatively low. Preferably, the total height H corresponds to a height of conveyor arrangements 34 leading to and from the conveyor junction 50. In various embodiments, total height H is lower than 250 mm and can be as low as 200 mm.

Any package or load carrier 14 positioned on the endless junction transfer belt 54 will be supported by the rotatable balls 58. As long as the endless junction transfer belt 54 is moving, the load carrier 14 will move together with the endless junction transfer belt 54. In a position right above the endless junction conveyor belt 64, the rotatable balls 58 will engage the upper part 66 of the endless junction conveyor belt 64. By driving the endless junction conveyor belt 64 in either direction the rotatable balls 58 will be rotated and the load carrier 14 moved. As shown in Fig. 6 and Fig. 7, driving the endless junction conveyor belt 64 with the upper part 66 in the direction of arrow 48 will force the rotatable balls 58 to rotate as indicated by curved arrows 51.

In an alternative embodiment of a conveyor junction 50' as shown in Fig. 7 driving of the endless junction conveyor belt 64 comprises third drive motor 80 and fourth drive motor 84 (only fourth drive motor 84 shown in Fig. 7). The endless junction conveyor belt 64 comprises two conveyor belts running in parallel, each conveyor belt running over a plurality of pulleys 88 and a single combined drive gear 87. A single combined drive gear 87 will ensure that the conveyor belts are synchronized. It is also possible to combine embodiments as shown in Fig. 6 with those shown in Fig. 7. For instance, double or multiple conveyor belts can be used in the embodiment shown in Fig. 6, and a single drive gear or drive unit can be included in the embodiment shown in Fig. 6. Similarly, multiple drive gears or drive units can be employed in the embodiments shown in Fig. 7.

In the embodiment shown in Fig. 8, the jointed flat sections 56 of the endless junction transfer belt 54 are rectangular with long sides of adjacent jointed flat sections rotatably connected to each other.

It will be apparent to those skilled in the art that various modifications and variations can be made without departing from the inventive concept. Other embodiments will be apparent to those skilled in the art from consideration of the specification and practice disclosed herein. It is intended that the specification and examples be considered as exemplary only, and that the claims be construed as encompassing all equivalents of the present invention which are apparent to those skilled in the art to which the invention pertains.

## Claims

1. A conveyor junction (50) for conveying goods (12) in different directions in a multi-storey goods storage arrangement, comprising a plurality of levels of rows arranged in parallel and comprising two transport rails extending in parallel along each row, and supply aisles extending in parallel between opposing ends of sets of said rows, said conveyor junction (50) comprising:
an endless junction transfer belt (54) extending horizontally over the conveyor junction (50) in a first direction, said endless junction transfer belt (54) comprising a plurality of jointed flat sections (56), each section (56) supporting a plurality of rotatable balls (58) extending partly from an upper side and from a bottom side of the section (56), said plurality of jointed sections (56) forming an upper transport portion (60) and a lower return portion (62); and
an endless junction conveyor belt (64) extending horizontally in a second direction perpendicular to said first direction and between said upper transport portion (60) and said lower return portion (62) of said endless junction transfer belt (54) and engaging with an upper part (66) the rotatable balls (58) of the upper transport portion (60) of said endless junction transfer belt (54).

2. The conveyor junction (50) of claim 1, wherein
a first drive motor (70) is connected to a first drive gear (72) and a second drive motor (74) is connected to a second drive gear (76), said first drive gear (72) and said second drive gear (76) supporting between them said endless junction transfer belt (54); and
a third drive motor (80) is connected to a third drive gear (82) and a fourth drive motor (84) is connected to a fourth drive gear (86), said third drive gear (82) and said fourth drive gear (86) supporting between them said endless junction conveyor belt (64).

3. The conveyor junction (50) of claim 1, wherein the third drive motor (80), the a third drive gear (82), the fourth drive motor (84), the fourth drive gear (86),and the endless junction conveyor belt (64) are arranged in a vertical direction between an upper transport portion (60) of said endless junction transfer belt (54) and a lower return portion (62) of said endless junction transfer belt (54).

4. The conveyor junction (50) of claim 3, wherein a total height H of said endless junction transfer belt (54) corresponds to a total height of conveyor arrangements (34) leading to and from the conveyor junction (50).

5. The conveyor junction (50) of claim 4, wherein the total height H is lower than 250mm.
